# EUROPÄISCHE PATENTSCHRIFT

(11) **EP 2 429 885 B1**
(45) Veröffentlichungstag und Bekanntmachung des Hinweises auf die Patenterteilung: **13.03.2019**
(21) Anmeldenummer: 10717050.8
(22) Anmeldetag: 21.04.2010
(51) Int. Cl.: B62J 9/00, E05B 77/48, E05B 81/24

(54) **GEPÄCKBEHÄLTER ZUR BEFESTIGUNG AN EINEM FAHRZEUG, INSBESONDERE AN EINEM MOTORRAD**
LUGGAGE CONTAINER FOR FASTENING TO A VEHICLE, IN PARTICULAR TO A MOTORCYCLE
CONTENANT À BAGAGES À FIXER À UN VÉHICULE, NOTAMMENT À UN MOTOCYCLE

(30) Priorität: 15.05.2009 DE 102009021529
(43) Veröffentlichungstag der Anmeldung: 21.03.2012
(73) Patentinhaber: Bayerische Motoren Werke Aktiengesellschaft, 80809 München (DE)
(72) Erfinder: REINHART, Peter, 82380 Peissenberg (DE)
(86) Internationale Anmeldenummer: PCT/EP2010/002420
(87) Internationale Veröffentlichungsnummer: WO 2010/130327

(56) Entgegenhaltungen:
- EP-A1- 1 921 001
- JP-A- 2008 230 293
- US-A1- 2001 030 438
- US-A1- 2002 034 321
- US-A1- 2007 214 849
- US-A1- 2008 178 642

## Beschreibung

Die vorliegende Erfindung betrifft ein Motorrad mit einem an dem Motorrad befestigten Gepäckbehälter gemäß dem Oberbegriff des Patentanspruches 1.

Ein derartiges Motorrad mit einem daran befestigten Gepäckbehälter ist aus der gattungsgemäßen EP 1 921 001 A1 bekannt., Zum technischen Hintergrund der vorliegenden Erfindung zählen ferner die US 2008/178642 A1, JP 2008230293 A, US 2001/030438 A, US 2007/214849 A1 sowie die US 2002/034321 A1.

Aus der EP 1 384 658 A2 ist ein Zentralverriegelungssystem für Gepäckbehälter von Motorrädern bekannt, bei dem am oder im Gepäckbehälter eine Spannungsversorgungseinrichtung zur Versorgung der Verriegelungseinrichtung mit elektrischer Spannung vorgesehen ist. Zum technischen Hintergrund der vorliegenden Erfindung zählen ferner die US 4 726 203, DE 10 2006 014 929 A1 sowie die US 4 907 428,

Aufgabe der Erfindung ist es, ein Motorrad mit einem an dem Motorrad befestigten einen Gepäckbehälter zu schaffen, der "zentral", d. h. vom Fahrzeug aus in einfacher Weise verriegelbar ist, wobei das "zentralverriegelungssystem" möglichst wartungsfrei sein soll.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist ein Gepäckbehälter zur Befestigung an einem Motorrad. Der Begriff "Gepäckbehälter" ist sehr breit zu verstehen und umfasst insbesondere, aber nicht ausschließlich, Motorradseitenkoffer und sogenannte "Topcases". Der Gepäckbehälter weist eine erste Sperreinrichtung auf, die eine Entsperrstellung und eine Sperrstellung einnehmen kann. In der Sperrstellung ist ein Öffnen des Gepäckbehälters grundsätzlich gesperrt. Eine notwendige aber nicht hinreichende Voraussetzung zum Öffnen des Gepäckbehälters ist, dass sich die erste Sperreinrichtung in Entsperrstellung befindet.

Der Grundgedanke der Erfindung besteht in einer "Zentralverriegelungseinrichtung", die so konzipiert ist, dass am bzw. im Gepäckbehälter keinerlei Elektrik bzw. Elektronik vorgesehen zu sein braucht. Der Kern der Erfindung besteht vielmehr darin, dass eine zweite Sperreinrichtung vorgesehen ist, die auch als "Master-Sperreinrichtung" bezeichnet werden kann. Die zweite, Sperreinrichtung kann ebenfalls eine Entsperrstellung oder eine Sperrstellung einnehmen. Ein charakteristisches Merkmal der Erfindung ist darin zu sehen, dass ein Öffnen des Gepäckbehälters durch die zweite Sperreinrichtung blockierbar ist, und zwar selbst dann, wenn sich die erste Sperreinrichtung in Entsperrstellung befindet. Ein Öffnen des Gepäckbehälters ist möglich, wenn sich die erste und die zweite Sperreinrichtung jeweils in ihrer jeweiligen Entsperrstellung befinden.

Nach der Erfindung weist die zweite Sperreinrichtung ein von einer Außenseite des Gepäckbehälters her betätigbares "Element" auf. Der Begriff "Element" ist äußerst breit auszulegen. Hierbei kann es sich beispielsweise um ein stift-, zapfen-, oder stangenartiges Element handeln, das in einer Längsrichtung verschieblich angeordnet ist. Alternativ zu einem verschieblich angeordneten Element kann es sich aber beispielsweise auch um ein schwenkbar angeordnetes Element handeln.

Das von der Außenseite des Gepäckbehälters her betätigbare Element kann beispielsweise durch ein Federelement in Richtung einer Grundstellung vorgespannt sein, in der sich die zweite Sperreinrichtung in ihrer Entsperrstellung befindet. Ferner kann vorgesehen sein, dass durch Betätigen des von der Außenseite des Gepäckbehälters her betätigbaren Elements entgegen der von der Feder ausgeübten Kraft die zweite Sperreinrichtung in ihre Sperrstellung gebracht werden kann.

Nach der Erfindung wirkt das von der Außenseite des Gepäckbehälters her betätigbare Element mit einem Aktor zusammen, der am Motorrad angeordnet ist. Bei dem Aktor kann es sich beispielsweise um einen elektrischen Stellmotor, um einen Hydraulikkolben, einen Pneumatikkolben o.ä. handeln,

Es kann vorgesehen sein, dass das von der Außenseite des Gepäckbehälters her betätigbare Element den Aktor berührt bzw. an dem Aktor anliegt oder in anderer Weise rein mechanisch mit dem Aktor zusammenwirkt, sobald der Gepäckbehälter an einer Halteeinrichtung des Motorrads befestigt bzw. in einer Halteeinrichtung des Motorrads eingerastet ist. Der Aktor kann beispielsweise über eine Fahrzeugelektronik angesteuert werden. Denkbar ist beispielsweise, dass am Fahrzeug ein Taster o. ä. vorgesehen ist, durch dessen Betätigung das von der Außenseite des Gepäckbehälters her betätigbare Element über den Aktor von einer Grundstellung in eine Betätigungsstellung bzw. umgekehrt schaltbar ist.

Im Folgenden wird die Erfindung im Zusammenhang mit der Zeichnung näher erläutert. Es zeigen:
- Figur 1: einen Teilquerschnitt durch einen im hinteren Seitenbereich eines Motorrads angeordneten Seitenkoffers;
- Figur 2: ein Diagramm zur Erläuterung der Funktionslogik eines Zentralverriegelungssystems gemäß der Erfindung.

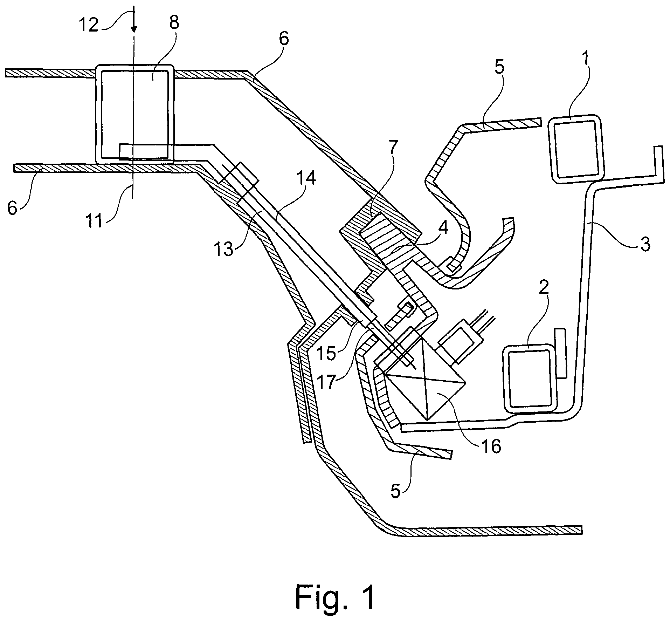

Figur 1 zeigt einen Teilquerschnitt durch einen im hinteren Seitenbereich eines Motorrads angeordneten Seitenkoffer. Vom Motorrad an sich sind hier lediglich zwei Längsträger 1, 2 sowie ein Heckträger 3 zu sehen. Am Rahmen des Motorrads sind schräg seitlich nach oben abstehende hakenartige Elemente vorgesehen, von denen hier lediglich ein hakenartiges Element 4 zu sehen ist. Teilbereiche des Motorrads sind ferner durch eine Verkleidung 5 verdeckt.

Seitlich am Motorrad ist ein Seitenkoffer 6 angeordnet, der Ausnehmungen 7 aufweist, die komplementär in Bezug auf die hakenartigen Elemente 4 gestaltet sind. Der Seitenkoffer 6 ist mit den Ausnehmungen 7 schräg von oben her auf die hakenartigen Elemente 4 aufgesetzt bzw. daran aufgehängt.

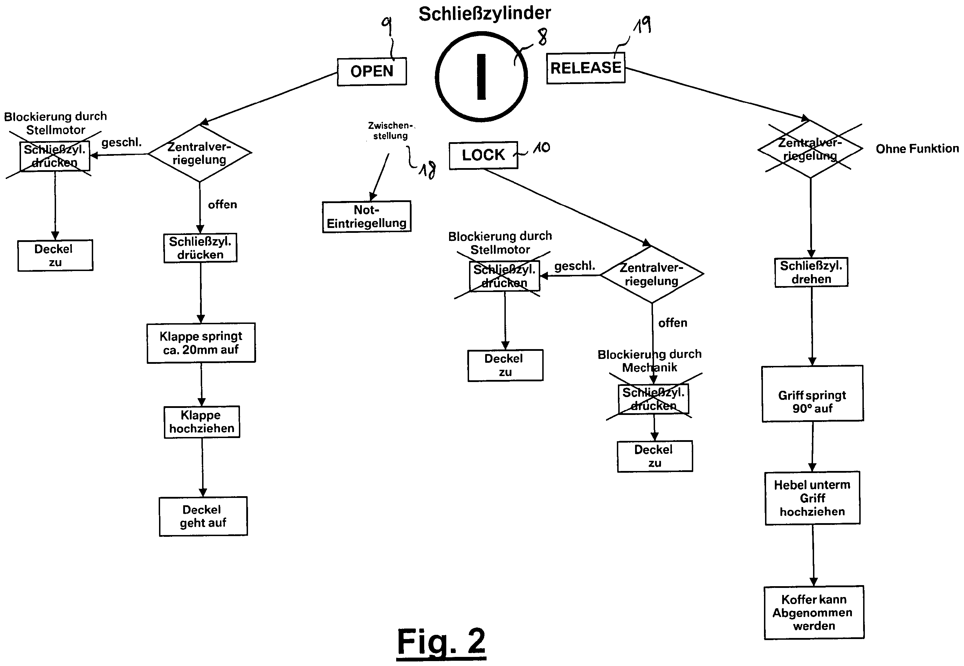

Der Motorradkoffer 6 weist ein hier nicht näher dargestelltes Deckelelement auf, das schwenkbar mit einem Grundelement verbunden ist. Der Motorradkoffer 6 kann mittels einer ersten Sperreinrichtung abgesperrt werden. Zentraler Bestandteil der ersten Sperreinrichtung ist ein Schließzylinder 8 (vgl. Figur 2), der mittels eines Schlüssels (nicht dargestellt) wahlweise in eine Entsperrstellung 9 (open) bzw. in eine Sperrstellurig10 (lock) gebracht werden kann. Der Schließzylinder 8 ist verschieblich in einer Längsrichtung 11 angeordnet. Befindet sich der Schließzylinder 8 in seiner Entsperrstellung, so kann der Gepäckbehälter durch nach unten Drücken des Schließzylinders 8 in Richtung des Pfeils 12 geöffnet werden.

Zusätzlich zu der ersten Sperreinrichtung ist eine zweite Sperreinrichtung vorgesehen, die auch als "Master-Sperreinrichtung" bezeichnet werden kann. Die zweite Sperreinrichtung weist eine am Seitenkoffer 6 vorgesehene Sperrmechanik auf, die hier vereinfachend durch eine Sperrstange 13 dargestellt ist, die in einer Längsrichtung 14 verschiebbar ist. Die Sperrstange 13 ist durch eine hier nicht näher dargestellte Feder in Richtung ihrer in Figur 1 gezeigten Grundstellung vorgespannt, in der ein Ende 15 der Sperrstange 13 ein Stück weit aus dem Motorradkoffer 6 heraussteht.

Mit der Sperrstange 13 zusammenwirkt ein elektromagnetischer Aktor 16, der einen in Längsrichtung 14 verschieblichen Anker 17 aufweist. Der Aktor 16 ist motorradfest angeordnet, d.h. er verbleibt am Motorrad, wenn der Seitenkoffer vom Motorrad abgenommen wird.

Das stirnseitige Ende 15 der Sperrstange 13 liegt also am stirnseitigen Ende des Ankers 17 an. Der Anker 17 kann zwei Stellungen einnehmen, nämlich eine eingefahrene Stellung (vgl. Figur 1) und eine ausgefahrene Stellung, in der die Sperrstange 13 etwas in Richtung des Schließzylinders 8 verschoben ist. Die ausgefahrene Stellung ist die Sperrstellung der zweiten Sperreinrichtung. Befindet sich die zweite Sperreinrichtung in ihrer Sperrstellung, so kann der Gepäckbehälter 6 selbst dann nicht geöffnet werden, wenn sich die erste Sperreinrichtung, d. h. der Schließzylinder 8 in Entsperrstellung befindet.

Befindet sich der Anker 17 hingegen in der in Figur 1 gezeigten eingefahrenen Stellung, welche der Entsperrstellung der zweiten Sperreinrichtung entspricht, so kann der Gepäckbehälter 6 geöffnet werden, sofern sich die erste Sperreinrichtung, d. h. der Schließzylinder in Öffnungsstellung 9 (vgl. Figur 2) befindet.

Wird der Gepäckbehälter 6 vom Motorrad abgenommen, so wird die Sperrstange 13 durch die hier nicht näher dargestellte Feder automatisch in ihre Entsperrstellung verschoben. In der Entsperrstellung hat die zweite Sperreinrichtung somit keinen Einfluss mehr auf die erste Sperreinrichtung. Ob der Gepäckbehälter 6 öffenbar ist oder nicht hängt dann nur noch von der Stellung der ersten Sperreinrichtung ab.

Die in Figur 2 dargestellte "Schaltlogik" verdeutlicht nochmals das Grundprinzip der in Figur 1 gezeigten Anordnung.

Befindet sich die erste Sperreinrichtung in Sperrstellung 10 so kann der Gepäckbehälter nicht geöffnet werden und zwar unabhängig davon ob
a) der Gepäckbehälter 6 am Fahrzeug befestigt ist oder nicht und
b) die "Zentralverriegelung", d. h. die zweite Sperreinrichtung sich in Entsperrstellung oder in Sperrstellung befindet.

Notwendige aber nicht hinreichende Voraussetzung für ein Öffnen des Gepäckbehälters ist grundsätzlich, dass sich die erste Sperreinrichtung in Öffnungsstellung 9 befindet. Befindet sich dann die zweite Sperreinrichtung (Zentralverriegelung) in Sperrstellung, so kann der Gepäckbehälter dennoch nicht geöffnet werden. Der Gepäckbehälter 6 kann vielmehr grundsätzlich nur dann geöffnet werden, wenn sich zusätzlich die "Zentralverrieglung", d. h. die zweite Sperreinrichtung in Entsperrstellung befindet.

Bei dem in Figur 2 beschriebenen Ausführungsbeispiel kann die erste Sperreinrichtung zusätzlich zu der Entsperrstellung 9 und der Sperrstellung 10 noch eine dazwischenliegende "Zwischenstellung" 18 einnehmen, die eine Notentriegelung bzw. ein Notöffnen des Gepäckbehälters 6 ermöglicht, wenn dieser
a) am Motorrad befestigt ist,
b) die zweite Sperreinrichtung sich in Sperrstellung befindet und
c) die zweite Sperreinrichtung ausgefallen ist, d. h. nicht mehr in Entsperrstellung zurückgeschaltet werden kann.

Unter Zuhilfenahme des Schlüssels kann der Schließzylinder in die Zwischenstellung 18 gebracht werden, in der durch Drücken des Schließzylinders 8 in Pfeilrichtung 12 (vgl. Figur 1) der Gepäckbehälter 6 geöffnet werden kann und zwar auch dann, wenn sich die zweite Sperreinrichtung in Sperrstellung befindet.

Vollständigkeitshalber sei noch die sogenannte "Release-Stellung" 19 erwähnt, in der der Gepäckbehälter 6 vom Fahrzeug abgenommen werden kann. Ist der Gepäckbehälter 6 vom Fahrzeug abgenommen, so hängt die Öffenbarkeit des Gepäckbehälters 6 ausschließlich von der ersten Sperreinrichtung ab. Bei abgenommenem Gepäckbehälter kann dieser geöffnet werden, wenn sich die erste Sperreinrichtung in Entsperrstellung befindet. In Sperrstellung hingegen kann der Gepäckbehälter dann nicht geöffnet werden.

## Patentansprüche

1. Motorrad mit einem an dem Motorrad befestigten Gepäckbehälter (6), mit
• einer ersten, einen Schließzylinder aufweisenden Sperreinrichtung, die eine Entsperrstellung (9) einnehmen kann, in der der Gepäckbehälter (6) öffenbar ist, und eine Sperrstellung (10), in der ein Öffnen des Gepäckbehälters (6) gesperrt ist, und
• einer zweiten Sperreinrichtung (13), die eine Sperrstellung einnehmen kann, in der ein Öffnen des Gepäckbehälters (6) selbst dann blockiert ist, wenn sich die erste Sperreinrichtung in Entsperrstellung (9) befindet, wobeidie zweite Sperreinrichtung (13) ein von einer Außenseite des Gepäckbehälters (6) her mechanisch betätigbares Element (15) aufweist,
**dadurch gekennzeichnet, dass** das Motorrad einen motorradfest angeordneten Aktor (16) aufweist, der zur Betätigung des von der Außenseite des Gepäckbehälters (6) her betätigbaren Elements (15) vorgesehen ist.

2. Motorrad mit einem Gepäckbehälter (6) nach Anspruch 1, **dadurch gekennzeichnet, dass** die zweite Sperreinrichtung (13) eine Entsperrstellung einnehmen kann, in der der Gepäckbehälter (6) öffenbar ist, sofern sich die erste Sperreinrichtung ebenfalls in Entsperrstellung befindet.

3. Motorrad mit einem Gepäckbehälter (6) nach einem der Ansprüche 1 oder 2, **dadurch gekennzeichnet, dass** das von der Außenseite des Gepäckbehälters (6) her betätigbare Element (15) durch ein Federelement in Richtung einer Grundstellung vorgespannt ist, in der sich die zweite Sperreinrichtung (13) in ihrer Entsperrstellung befindet.

4. Motorrad mit einem Gepäckbehälter (6) nach Anspruch 3, **dadurch gekennzeichnet, dass** die zweite Sperreinrichtung (13) durch Betätigen des von der Außenseite des Gepäckbehälters (6) her betätigbaren Elements (15) ausgehend von dessen Grundstellung entgegen der von der federausgeübten Kraft in ihre Sperrstellung bringbar ist.

5. Motorrad mit einem Gepäckbehälter (6) nach einem der Ansprüche 1 bis 4, **dadurch gekennzeichnet, dass** von einer Außenseite des Gepäckbehälters (6) her betätigbare Element (13) in einer Verschieberichtung (14) verschiebbar angeordnet ist.

6. Motorrad mit einem Gepäckbehälter (6) nach einem der Ansprüche 1 bis 5, **dadurch gekennzeichnet, dass** das von einer Außenseite des Gepäckbehälters (6) her betätigbares Element in seiner Grundstellung vom Gepäckbehälter (6) absteht.

7. Motorrad mit einem Gepäckbehälter (6) nach einem der Ansprüche 1 bis 6, **dadurch gekennzeichnet, dass** es sich bei dem von einer Außenseite des Gepäckbehälters (6) her betätigbaren Element (15) um ein stift- bzw. zapfenartiges Element handelt.

8. Motorrad mit einem Gepäckbehälter (6) nach einem der Ansprüche 1 bis 7, **dadurch gekennzeichnet, dass** die erste Sperreinrichtung mittels eines Schlüssels von der Entsperrstellung (9) in Sperrstellung bringbar ist, und umgekehrt.

9. Motorrad mit einem Gepäckbehälter (6) nach einem der Ansprüche 1 bis 8, **dadurch gekennzeichnet, dass** der Schließzylinder (8) zum Öffnen des Gepäckbehälters (6) vorgesehen ist, wobei der Schließzylinder (8) eine unbetätigte Grundstellung und eine Betätigungsstellung aufweist, wobei der Schließzylinder (8) zum Öffnen des Gepäckbehälters (6) von der Grundstellung in seine Betätigungsstellung zu bringen ist.

10. Motorrad mit einem Gepäckbehälter (6) nach Anspruch 9, **dadurch gekennzeichnet, dass** der Schließzylinder (8) in einer Längsrichtung (11) verschieblich angeordnet ist, wobei die Betätigungsstettung des Schließzylinders in Bezug auf seine Grundstellung in Richtung des Inneren des Gepäckbehälters verschoben ist.

11. Motorrad mit einem Gepäckbehälter (6) nach einem der Ansprüche 1 bis 10, **dadurch gekennzeichnet, dass** der Aktor (16) dazu vorgesehen ist, das von der Außenseite des Gepäckbehälters her betätigbare Element (15) von seiner Grundstellung in eine Betätigungsstellung zu bringen und/oder in der Betätigungsstellung zu halten.

12. Motorrad mit einem Gepäckbehälter (6) nach einem der Ansprüche 1 bis 11, **dadurch gekennzeichnet, dass** das von der Außenseite des Gepäckbehälters (6) her betätigbare Element (15) den Aktor berührt bzw. an dem Aktor anliegt, sobald der Gepäckbehälter (16) an einer Halteeinrichtung (4) des Fahrzeugs befestigt ist.

13. Motorrad mit einem Gepäckbehälter (6) nach einem der Ansprüche 1 bis 12, **dadurch gekennzeichnet, dass** es sich bei dem Aktor (16) um einen elektrisch ansteuerbaren Aktor handelt.

14. Motorrad mit einem Gepäckbehälter (6) nach einem der Ansprüche 1 bis 13, **dadurch gekennzeichnet, dass** der Aktor (16) durch Betätigen eines Schalter- bzw. Tasterelements schaltbar ist, das am Motorrad, insbesondere in einem Lenkerbereich des Motorrads angeordnet ist.

## Claims

1. A motorcycle with a luggage container (6) fastened to the motorcycle, with
• a first blocking means which has a lock cylinder, which means can assume an unblocking position (9) in which the luggage container (6) can be opened, and a blocking position (10) in which opening of the luggage container (6) is blocked, and
• a second blocking means (13) which can assume a blocking position in which opening of the luggage container (6) itself is then blocked if the first blocking means is in the unblocking position (9), wherein the second blocking means (13) has an element (15) which can be actuated mechanically from an outside of the luggage container (6),
**characterised in that** the motorcycle has an actuator (16) arranged secured to the motorcycle, which is provided for actuating the element (15) which can be actuated from the outside of the luggage container (6).

2. A motorcycle with a luggage container (6) according to Claim 1, **characterised in that** the second blocking means (13) can assume an unblocking position in which the luggage container (6) can be opened, provided that the first blocking means is likewise in the unblocking position.

3. A motorcycle with a luggage container (6) according to one of Claims 1 or 2, **characterised in that** the element (15) which can be actuated from the outside of the luggage container (6) is pre-tensioned by a spring element in the direction of a basic position in which the second blocking means (13) is located in its unblocking position.

4. A motorcycle with a luggage container (6) according to Claim 3, **characterised in that** the second blocking means (13) can be brought into its blocking position by actuating the element (15) which can be actuated from the outside of the luggage container (6) starting from the basic position thereof counter to the force exerted by the spring.

5. A motorcycle with a luggage container (6) according to one of Claims 1 to 4, **characterised in that** element (13) which can be actuated from an outside of the luggage container (6) is arranged to be displaceable in a direction of displacement (14).

6. A motorcycle with a luggage container (6) according to one of Claims 1 to 5, **characterised in that** the element which can be actuated from an outside of the luggage container (6) protrudes from the luggage container (6) in its basic position.

7. A motorcycle with a luggage container (6) according to one of Claims 1 to 6, **characterised in that** the element (15) which can be actuated from an outside of the luggage container (6) is a pin-like or stud-like element.

8. A motorcycle with a luggage container (6) according to one of Claims 1 to 7, **characterised in that** the first blocking means can be brought from the unblocking position (9) into the blocking position and vice versa by means of a key.

9. A motorcycle with a luggage container (6) according to one of Claims 1 to 8, **characterised in that** the lock cylinder (8) is provided for opening the luggage container (6), the lock cylinder (8) having a non-actuated basic position and an actuation position, the lock cylinder (8) for opening the luggage container (6) having to be brought from the basic position into its actuation position.

10. A motorcycle with a luggage container (6) according to Claim 9, **characterised in that** the lock cylinder (8) is arranged displaceably in a longitudinal direction (11), the actuation position of the lock cylinder being displaced with regard to its basic position in the direction of the interior of the luggage container.

11. A motorcycle with a luggage container (6) according to one of Claims 1 to 10, **characterised in that** the actuator (16) is provided to bring the element (15) which can be actuated from the outside of the luggage container from its basic position into an actuation position and/or to keep it in the actuation position.

12. A motorcycle with a luggage container (6) according to one of Claims 1 to 11, **characterised in that** the element (15) which can be actuated from the outside of the luggage container (6) touches the actuator or lies against the actuator as soon as the luggage container (6) is fastened to a holding means (4) of the vehicle.

13. A motorcycle with a luggage container (6) according to one of Claims 1 to 12, **characterised in that** the actuator (16) is an electrically controllable actuator.

14. A motorcycle with a luggage container (6) according to one of Claims 1 to 13, **characterised in that** the actuator (16) can be switched by actuating a switch element or button element which is arranged on the motorcycle, especially in a handlebar region of the motorcycle.

## Revendications

1. Motocycle comprenant un conteneur à bagages (6) fixé à celui-ci comportant :
un premier dispositif de verrouillage comprenant un cylindre de fermeture pouvant prendre une position de déverrouillage (9) dans laquelle le conteneur à bagages (6) peut être ouvert et une position de verrouillage (10) dans laquelle l'ouverture du conteneur à bagages (6) est verrouillée,
et
un second dispositif de verrouillage (13) pouvant prendre une position de verrouillage dans laquelle l'ouverture du conteneur à bagages (6) est bloquée même lorsque le premier dispositif de verrouillage se trouve dans la position de déverrouillage (9), le second dispositif de verrouillage (13) comprenant un élément (15) pouvant être actionné mécaniquement à partir de la face externe du conteneur à bagages (6),
**caractérisé en ce que**
le motocycle comporte un actionneur (16) monté solidairement sur celui-ci, qui est prévu pour permettre un actionnement de l'élément (15) pouvant être actionné à partir de la face externe du conteneur à bagages (6).

2. Motocycle comprenant un conteneur à bagages (6) conforme à la revendication 1,
**caractérisé en ce que**
le second dispositif de verrouillage (13) peut prendre une position de déverrouillage dans laquelle le conteneur à bagages (6) peut être ouverte dans la mesure où le premier dispositif de verrouillage se trouve également dans la position de déverrouillage.

3. Motocycle comprenant un conteneur à bagages (6) conforme à l'une des revendications 1 et 2,
**caractérisé en ce que**
l'élément (15) pouvant être actionné à partir de la face externe du conteneur à bagages (6) est précontraint par un élément à ressort en direction d'une position de base dans laquelle le second dispositif de verrouillage (13) se trouve dans sa position de déverrouillage.

4. Motocycle comprenant un conteneur à bagages (6) conforme à la revendication 3,
**caractérisé en ce que** par actionnement de l'élément (15) pouvant être actionné à partir de la face externe du conteneur à bagages (6) le second dispositif de verrouillage (13) peut être transféré dans sa position de verrouillage, à partir de sa position de base, contre la force exercée par le ressort.

5. Motocycle comprenant un conteneur à bagages (6) conforme à l'une des revendications 1 à 4,
**caractérisé en ce que**
l'élément (15) pouvant être actionné à partir de la face externe du conteneur à bagages (6) est monté lissant dans une direction de coulissement (14).

6. Motocycle comprenant un conteneur à bagages (6) conforme à l'une des revendications 1 à 5,
**caractérisé en ce que**
l'élément pouvant être actionné à partir de la face externe du conteneur à bagages (6) dépasse du conteneur à bagages (6) dans sa position de base.

7. Motocycle comprenant un conteneur à bagages (6) conforme à l'une des revendications 1 à 6,
**caractérisé en ce que**
l'élément (15) pouvant être actionné à partir de la face externe du conteneur à bagages (6) est constitué par un élément en forme de tige ou de tourillon.

8. Motocycle comprenant un conteneur à bagages (6) conforme à l'une des revendications 1 à 7,
**caractérisé en ce que**
le premier dispositif de verrouillage peut être transféré au moyen d'une clé de la position de déverrouillage (9) à la position de verrouillage et inversement.

9. Motocycle comprenant un conteneur à bagages (6) conforme à l'une des revendications 1 à 8,
**caractérisé en ce que**
le cylindre de fermeture (8) est prévu pour ouvrir le conteneur à bagages (6), ce cylindre de fermeture (8) ayant une position de base non actionnée et une position d'actionnement, et étant transféré de sa position de base dans sa position d'actionnement pour ouvrir le conteneur à bagages (6).

10. Motocycle comprenant un conteneur à bagages (6) conforme à la revendication 9,
**caractérisé en ce que**
le cylindre de fermeture (8) est monté coulissant dans une direction longitudinale (11), la position d'actionnement du cylindre de fermeture étant décalée par rapport à sa position de base en direction de la partie interne du conteneur à bagages.

11. Motocycle comprenant un conteneur à bagages (6) conforme à l'une des revendications 1 à 10,
**caractérisé en ce que**
l'actionneur (16) est prévu pour permettre de transférer l'élément (15) pouvant être actionné à partir de la face externe du conteneur à bagages de sa position de base à sa position d'actionnement et/ou le maintenir dans sa position d'actionnement.

12. Motocycle comprenant un conteneur à bagages (6) conforme à l'une des revendications 1 à 11,
**caractérisé en ce que**
l'élément (15) pouvant être actionné à partir de la face externe du conteneur à bagages (6) est en contact avec l'actionneur ou s'applique sur l'actionneur (16) dans la mesure ou le conteneur à bagages (7) est fixé à un dispositif de maintien (4) du véhicule.

13. Motocycle comprenant un conteneur à bagages (6) conforme à l'une des revendications 1 à 12,
**caractérisé en ce que**
l'actionneur (16) est un actionneur à commande électrique.

14. Motocycle comprenant un conteneur à bagages (6) conforme à l'une des revendications 1 à 13,
**caractérisé en ce que**
l'actionneur (16) peut être commuté par actionnement d'un élément de commutation ou d'un élément palpeur qui est monté sur le motocycle, en particulier dans la zone du guidon de ce motocycle.
